# EUROPEAN PATENT APPLICATION

(11) **EP 2 273 088 A1**
(43) Date of publication of application: **12.01.2011**
(21) Application number: 10251079.9
(22) Date of filing: 11.06.2010
(51) Int. Cl.: F02C 7/224, F02C 7/10

(54) **Adaptive heat sink for thermal management systems**

(30) Priority: 12.06.2009 US 483764
(71) Applicant: Hamilton Sundstrand Corporation, Windsor Locks, CT 06096-1010 (US)
(72) Inventor: Lents, Charles E., Amston, CT 06231 (US); Kaslusky, Scott F., West Hartford, CT 06119 (US)
(74) Representative: Tomlinson, Kerry John

(57) **Abstract**

An avionics cooling system (10) includes a first heat exchange system (16), a second heat exchange system (18) and a vapor cycle system (14). The second heat exchange system has a heat sink capacity that is generally out of phase with a heat sink capacity of the first heat exchange system. The vapor cycle includes a fluid loop (20) in communication with the first and second heat exchange systems and the fluid loop transfers heat to the first and second heat exchange systems. A method for cooling aircraft components includes selectively directing a fluid having an elevated temperature in a fluid loop of a vapor cycle system to a first heat exchanger (28) to transfer heat from the fluid to a fuel based on a heat sink capacity of the fuel, selectively directing the fluid to a second heat exchanger (40) to transfer heat from the fluid to air based on a heat sink capacity of the air, and cooling aircraft components with the fluid.

## Description

### BACKGROUND

Modem aircraft utilize sophisticated systems for thermal management and cooling of various aircraft components. In the case of avionics cooling, heat is transferred from the avionics to a heat sink in order to keep the avionics at a temperature suitable for operation.

In air cycle cooling, cool high-pressure air or ram air can function as the heat sink. Cool high-pressure air can be bled from an air source, such as the engine fan discharge. Using air bled from the engine reduces engine thrust and incurs a performance penalty. Ram air can also be used as a heat sink in air cycle cooling systems. In certain aircraft, such as commercial aircraft, ram air can be a suitable heat sink. However, ram air presents certain drawbacks for military aircraft, particularly those with engines embedded within the fuselage or wing. First, ram air imparts a penalty to performance by taking air onboard via an intake (i.e. ram drag). Additionally, for embedded engines, air scoops and other openings on the aircraft are necessary to provide ram air to cool the engine. The scoops and other openings are generally configured to provide enough ram air to cool only the engine. Multiple scoops or openings present on an aircraft can compromise the aircraft's ability to avoid radar detection. Thus, adding additional ram air sources to cool avionics is generally undesirable. Additionally, in certain situations (e.g., ground idle conditions), ram air is unavailable for use as a heat sink.

Fuel is also used as a heat sink in some avionics cooling systems. Typically, heat is transferred to the fuel from systems on the aircraft prior to delivery to the engine. Using fuel as a heat sink avoids some of the penalties associated with air cycle cooling, however, some limitations remain. For instance, the effectiveness of fuel as a heat sink is limited by the maximum temperature tolerable by the fuel and the maximum cycle temperatures within aircraft cooling systems. When the flow of fuel to the engine is low (e.g., ground idle conditions, descent), the fuel has a low capacity as a heat sink.

### SUMMARY

An avionics cooling system includes a first heat exchange system, a second heat exchange system and a vapor cycle system. The second heat exchange system has a heat sink capacity that is generally out of phase with a heat sink capacity of the first heat exchange system. The vapor cycle includes a fluid loop in communication with the first and second heat exchange systems, and the fluid loop transfers heat to the first and second heat exchange systems.

An aircraft cooling system includes a fuel heat exchanger for transferring heat to a fuel, an engine bay air heat exchanger for transferring heat to air that provides cooling to an engine bay, and a vapor cycle system in communication with the fuel heat exchanger and the engine bay air heat exchanger. The vapor cycle system cools aircraft components.

A method for cooling aircraft components includes directing a first fluid having an elevated temperature to a first heat exchanger to transfer heat from the fluid to a fuel based on a heat sink capacity of the fuel. The method also includes selectively directing the first fluid to a second heat exchanger to transfer heat from the fluid to air based on a heat sink capacity of the air. The method further includes transferring heat from a second fluid to the first fluid to cool the second fluid and cooling aircraft components with the second fluid.

### BRIEF DESCRIPTION OF THE DRAWINGS

FIG. 1 is a schematic representation of a thermal management system with an adaptive heat sink.

FIG. 2 is a schematic representation of another thermal management system with an adaptive heat sink.

FIG. 3 is a schematic representation of yet another thermal management system with an adaptive heat sink.

FIG. 4 is a flow diagram illustrating a method for cooling aircraft avionics.

### DETAILED DESCRIPTION

The present invention provides a thermal management system with an adaptive heat sink. One or more sources can be used as the heat sink for the thermal management system. In one embodiment, fuel and air from an engine bay cooperatively function together as the adaptive heat sink. At any time, heat can be transferred from the avionics system to the fuel, the air or both the fuel and the air. Neither the fuel alone, nor the engine bay air alone can be used to fully cool the avionics system during all possible aircraft conditions (ground idle, takeoff, descent, etc.). However, when combined, the two generally out of phase fuel and air heat sinks can provide heat sink capacity for cooling and avionics systems over a complete aircraft mission.

During aircraft operation, the relative heat sink capacities of the fuel and the engine bay air are generally out of phase. When the fuel heat sink capacity is high, the engine bay air heat sink capacity is generally low. When the fuel heat sink capacity is low, the engine bay air heat sink capacity is generally high. For example, during takeoff, ascent or turn maneuvers, fuel is delivered to the aircraft's engine at a high flow rate. At these times, the fuel heat sink capacity is high. A great deal of heat can be delivered to the flow of fuel to the engine before the tolerable temperature limit is reached because of the high fuel flow rate. At the same time, the engine bay air heat sink capacity is low. While air is moving through the engine bay, virtually all of the engine bay air is being used to cool the engine, which is operating at full power and is generating the maximum amount of heat. The engine bay air does not have additional capacity to accept heat transferred from other sources.

Aircraft descent provides another example where the fuel heat sink capacity and engine bay air heat sink capacity are out of phase. During descent, fuel is supplied to the engine at a relatively low rate. The lower fuel flow rate significantly reduces the fuel's heat sink capacity. At the same time, the engine bay air heat sink capacity is high. Due to the speed of the aircraft, ram air enters and flows through the engine bay at a high rate. Since the engine is operating at a low power setting and is generating the minimum amount of heat, the engine bay air is able to cool the engine and provide additional cooling capacity to absorb heat from other sources. At certain times, a fuel heat sink or an engine bay air heat sink can be used to effectively cool an aircraft's avionics system on its own. However, at one time or another, the heat sink capacities of the fuel and the engine bay air will be too low to effectively cool the avionics system alone.

The present invention provides a thermal management system and method for adapting a heat sink to transfer energy to heat sink systems that are generally out of phase. At different times during aircraft operation, heat is transferred to one or more heat sink systems. The thermal management system takes advantage of heat sinks already present on the aircraft without the introduction of additional ram air or other sources.

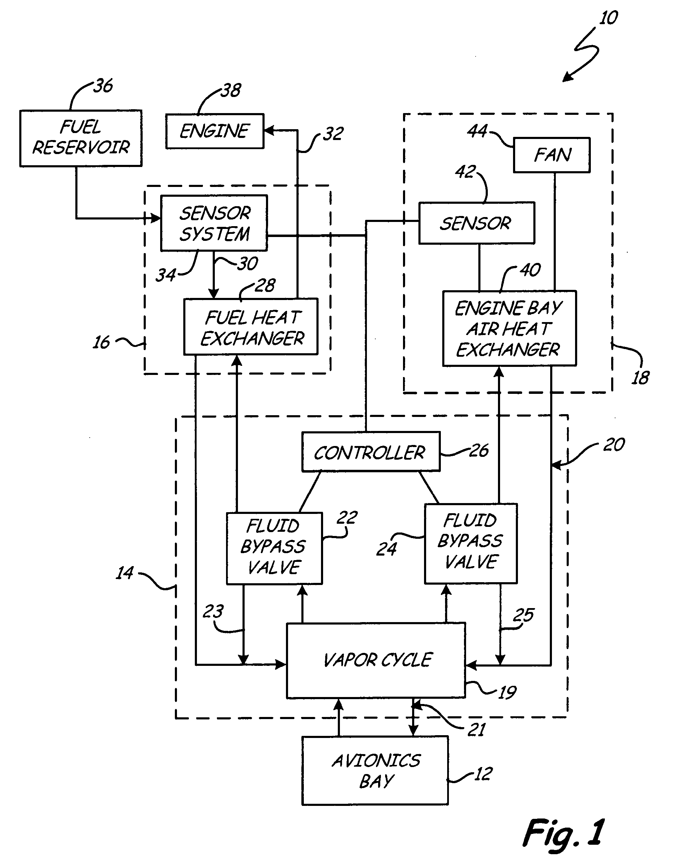

FIG. 1 illustrates a schematic representation of thermal management system 10 with an adaptive heat sink. Thermal management system 10 includes avionics bay 12, vapor cycle system 14, fuel heat exchange system 16 and engine bay heat exchange system 18. Avionics bay 12 transfers heat generated by avionics to vapor cycle system 14. Vapor cycle system 14 transfers heat received from avionics bay 12 to fuel heat exchange system 16 and/or engine bay heat exchange system 18. While this embodiment of thermal management system 10 includes heat exchange system 18 in an engine bay, other cool air sources can be used with heat exchange system 18, such as other existing ram air sources. Vapor cycle system 14 can also supply cooling to systems on the aircraft other than avionics bay 12, including cabin ventilation air.

Avionics bay 12 can include some or all electrical systems used on the aircraft. Avionics bay 12 includes systems such as communications, navigation, flight control systems, tactical avionics and other aircraft management systems. Components and systems in avionics bay 12 must be maintained below certain threshold temperatures to operate effectively. Depending on the systems present and their configurations, systems in avionics bay 12 must generally maintain a temperature below about 15 °C (59 °F). When systems in avionics bay 12 are active, they generate heat. To prevent avionics bay 12 from reaching or exceeding threshold temperatures, heat is transferred from avionics bay 12 to vapor cycle system 14.

Vapor cycle system 14 includes vapor cycle 19, heat sink fluid loop 20, cooling fluid loop 21, fluid bypass valve 22, fluid bypass valve 24, and controller 26. Vapor cycle 19 is a vapor-compression refrigeration system. Vapor cycle 19 typically includes one or more compressors, condensers, expansion valves and evaporators. Vapor cycle 19 can also include an economizer. Vapor cycle 19 can be a single- or multi-stage refrigeration system. Fluid flowing within vapor cycle 19 can be any refrigerant compatible with vapor-compression refrigeration. Suitable fluids include, but are not limited to R-134a. Vapor cycle 19 transfers heat between fluids in order to provide cooling to avionics bay 12.

Vapor cycle system 14 cools avionics bay 12 by directing a cooling fluid to avionics bay 12 through cooling fluid loop 21. Suitable cooling fluids include, but are not limited to polyalphaolefins. Heat is transferred from avionics bay 12 to the cooling fluid and returned to vapor cycle system 14 via cooling fluid loop 21 for subsequent transfer to fuel or engine bay air. "Hot" fluid from vapor cycle system 14 flows through heat sink fluid loop 20 to fuel heat exchange system 16 and engine bay heat exchange system 18. Suitable fluids for the "hot" fluid include, but are not limited to polyalphaolefins. In fuel heat exchange system 16 and engine bay heat exchange system 18, heat is transferred from the hot fluid to the fuel and engine bay air, respectively. Vapor cycle system 14 can be configured in a variety of different ways that allow it to transfer heat from avionics bay 12 to heat exchange systems 16, 18.

Heat sink fluid loop 20 connects vapor cycle system 14 with fuel heat exchange system 16 and engine bay heat exchange system 18. Fluid bypass valves 22 and 24 are present within fluid loop 20. Heat sink fluid loop 20 delivers hot fluid from vapor cycle system 14 to heat exchange systems 16, 18 to transfer heat from vapor cycle system 14.

Fluid bypass valves 22 and 24 regulate the flow of fluid from vapor cycle system 14 to fuel heat exchange system 16 and engine bay heat exchange system 18, respectively. As discussed above, the fuel and engine bay air do not have unlimited capacity for accepting heat transfer. During low fuel consumption states, the flow of fuel to the engine is low and the fuel heat sink capacity is relatively low. When the engine is burning the maximum or a relatively large amount of fuel, the engine bay air is needed to cool the engine and its capacity for accepting heat transfer from additional heat sources is low. Fluid bypass valves 22, 24 provide a way of regulating the flow of hot fluid from vapor cycle system 14 to fuel heat exchange system 16 and engine bay heat exchange system 18 so that the fuel temperature remains within appropriate limits and the engine bay air is allowed to cool the engine effectively.

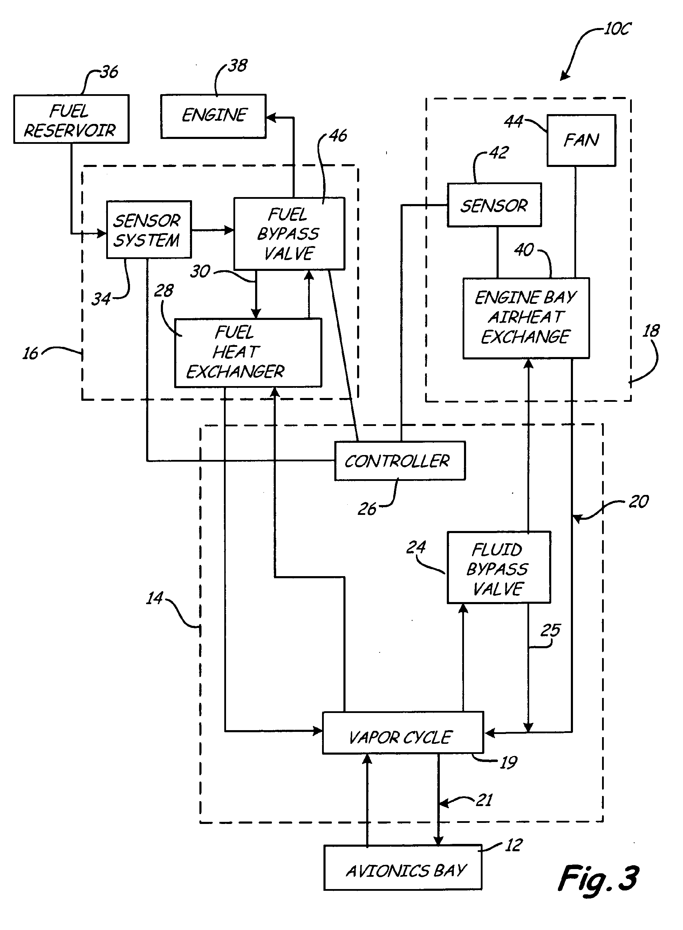

Fluid bypass valve 22 prevents or restricts the flow of hot fluid from vapor cycle system 14 to fuel heat exchange system 16 when engine fuel flow is low. In another embodiment described in greater detail below, the bypass valve is located on the fuel side of the heat exchanger rather than the fluid side (See FIG. 3). Fluid bypass valve 24 prevents or restricts the flow of hot fluid from vapor cycle system 14 to engine bay heat exchange system 18 when engine fuel flow is high and all of the engine bay air is needed to cool the engine and engine bay. Depending on the configuration of thermal management system 10, hot fluid diverted by fluid bypass valves 22, 24 away from one heat exchange system 16, 18 is returned to vapor cycle system 14 or routed to the other heat exchange system 16, 18. In the embodiment illustrated in FIG. 1, fuel heat exchange system 16 and engine bay heat exchange system 18 are connected to vapor cycle system 14 in parallel. Hot fluid diverted from heat exchange systems 16, 18 by fluid bypass valves 22, 24 are returned to vapor cycle system 14 via bypass lines 23 and 25, respectively. Fluid bypass valves 22 and 24 can be variable valves with flow control so that a portion of the fluid can be sent to heat exchange systems 16, 18 and another portion diverted back to vapor cycle system 14 (or to the other heat exchange system 16, 18).

Controller 26 regulates fluid flow through fluid bypass valves 22 and 24. Controller 26 receives information from fuel heat exchange system 16 and engine bay heat exchange system 18 to determine how much fluid can be delivered to heat exchange systems 16 and 18. The information controller 26 receives can include, but is not limited to, engine fuel flow rates, fuel temperature, fuel flow rates in fuel heat exchange system 16, engine throttle settings, engine bay air flow rate schedule, engine bay air temperature, and temperatures of internal and external engine components.

Based on the information it receives, controller 26 regulates the flow of hot fluid from vapor cycle system 14 to fuel heat exchange system 16 and engine bay heat exchange system 18. Controller 26 can regulate hot fluid flow based on fuel and engine bay air temperatures and regulate fluid flow to achieve optimal efficiency. By regulating the flow of hot fluid to fuel heat exchange system 16, controller 26 prevents heat transfer to the fuel that can raise the fuel temperature to levels near or above maximum tolerable limit. By regulating the flow of hot fluid to engine bay heat exchange system 18, controller 26 prevents heat transfer to the engine bay air that can reduce the engine bay air's ability to cool the engine and its components. Controller 26 can also regulate fluid bypass valves 22 and 24 to optimize cooling efficiency. Based on the information it receives, controller 26 can direct fluid flow between fuel heat exchange system 16 and engine bay heat exchange system 18 to transfer the maximum amount of heat from the vapor cycle's hot fluid. For example, when the fuel heat sink capacity is higher than the engine bay air heat sink capacity, controller 26 regulates fluid bypass valves 22 and 24 so that they deliver a larger quantity of hot fluid to the fuel heat exchange system 16 and a smaller quantity of hot fluid to the engine bay heat exchange system 18. As the heat sink capacities of heat exchange systems 16, 18 change, controller 26 adapts the hot fluid flow to take advantage of the heat exchange system 16, 18 with the larger heat sink capacity.

Fuel heat exchange system 16 receives heat from vapor cycle system 14 and transfers the heat to fuel flowing in the aircraft. Fuel heat exchange system 16 includes fuel heat exchanger 28, fuel heat exchanger inlet 30, fuel heat exchanger outlet 32 and sensor system 34. Fuel is stored on the aircraft in fuel reservoir 36. During operation of the aircraft, fuel is delivered from fuel reservoir 36 to engine 38 for combustion. At least a portion of the fuel delivered to engine 38 passes through fuel heat exchange system 16. Fuel delivered to fuel heat exchange system 16 flows from reservoir 36 to inlet 30 and enters heat exchanger 28. Fuel exits heat exchanger 28 at outlet 32 and continues to engine 38.

Fuel heat exchanger 28 is in communication with the hot fluid from vapor cycle system 14. Fuel heat exchanger 28 transfers heat from the hot fluid to the fuel flowing through fuel heat exchanger 28. When fluid from vapor cycle system 14 flows through fuel heat exchanger 28, the fuel in fuel heat exchange system 16 has a higher temperature at outlet 32 than at inlet 30.

Sensor system 34 monitors the temperature and flow rate of fuel in fuel heat exchange system 16. Sensor system 34 is located within fuel heat exchange system 16. In the embodiment illustrated in FIG. 1, sensor system 34 is located near the inlet to engine 38. Sensor system 34 transmits temperature and flow rate information to controller 26, which then regulates the flow of hot fluid from vapor cycle system 14 to fuel heat exchanger 28. The amount of hot fluid delivered to fuel heat exchanger 28 is optimized by controller 26 for efficiency and to prevent heat transfer that would elevate the fuel temperature beyond a tolerable limit.

Engine bay air heat exchange system 18 receives heat from vapor cycle system 14 and transfers the heat to air flowing through an aircraft engine bay. Engine bay air heat exchange system 18 includes engine bay air heat exchanger 40, sensor 42 and optional fan 44. Engine bay air heat exchanger 40 is located near or within the aircraft engine bay. During engine operation, air passes through the engine bay to cool engine 36. During flight, ram air is used to cool engine 36. Ram air is provided to the engine bay by an intake, air scoop or other opening in the aircraft exterior. When the aircraft is on the ground while engine 36 is operating, ram air is unavailable and an exhaust fan (not shown) is used to draw air through the engine bay in order to cool engine 36.

Engine bay air heat exchanger 40 is located within the airflow stream used to cool engine 36 in the engine bay. In terms of positioning, engine bay air heat exchanger 40 is generally located forward of engine 36 (i.e. heat transfer takes place at heat exchanger 40 before the airflow cools engine 36) to take advantage of cooler airflow. Sensor system 42 is located within the engine bay and transmits air temperature, air flow rate, and engine temperature information to controller 26 which then regulates the flow of hot fluid from vapor cycle system 14 to engine bay air heat exchanger 40. The amount of hot fluid delivered to engine bay air heat exchanger 40 is optimized by controller 26 for efficiency and to prevent heat transfer to the engine bay air that would reduce its capacity to cool engine 36 to a necessary temperature level.

In one embodiment, engine bay air heat exchanger 40 is located in an air scoop duct. An air scoop is an external opening on the aircraft that provides a source of ram air. Ram air is delivered from the air scoop to various areas of the aircraft (including the engine bay) for cooling by one or more ducts. In some aircraft, such as those with embedded engines, air scoops are used to provide cooling air to the engine. Engine bay air heat exchanger 40 can be located within an air scoop duct to take advantage of cool ram air before it is delivered to the engine bay and used to cool engine 36. As noted above, introducing additional ram air sources can have a negative impact on radar detection. Positioning engine bay air heat exchanger 40 within an existing air scoop duct permits avionics cooling without creating additional ram air sources-the air scoop is needed to provide ram air to cool engine 36. Engine bay air heat exchanger 40 can also be located within the engine bay itself or in other ducts through which airflow used to cool the engine bay flows.

Engine bay air heat exchanger 40 can also include fan 44. When engine bay air heat exchanger 40 is located in an air scoop duct or other airflow duct, the pressure drop across engine bay air heat exchanger 40 can prevent airflow through heat exchanger 40. Fan 44 draws air across engine bay air heat exchanger 40, eliminating the pressure drop that could prevent airflow through heat exchanger 40.

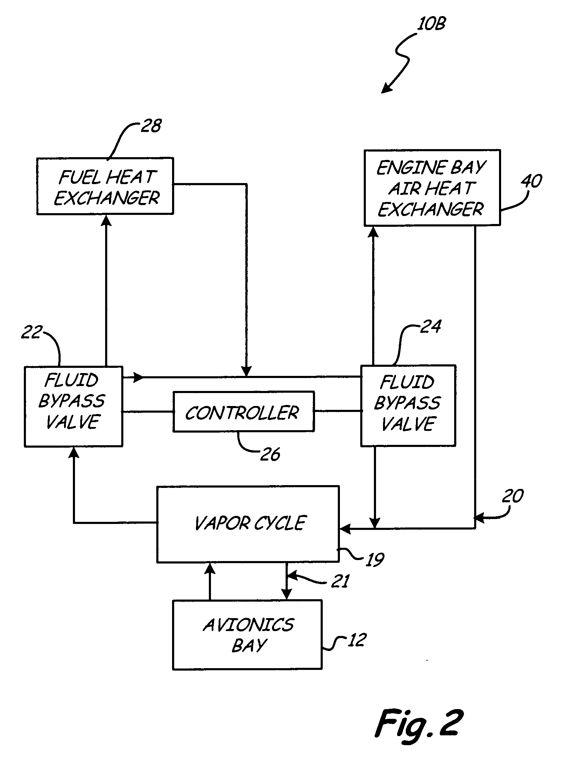

Thermal management system 10 schematically illustrated in FIG. 1 includes fuel heat exchange system 16 and engine bay air heat exchange system 18 in parallel. Fuel heat exchange system 16 and engine bay air heat exchange system 18 can also be arranged serially in thermal management system 10B as illustrated in FIG. 2. FIG. 2 shows thermal management system 10B including avionics bay 12; vapor cycle system 14; heat sink fluid loop 20; fluid bypass valves 22 and 24; controller 26; fuel heat exchanger 28 and engine bay air heat exchanger 40. The elements of thermal management system 10B function in the same way as those of thermal management system 10, however, heat sink fluid loop 20 is arranged to connect fuel heat exchanger 28 and engine bay air heat exchanger 40 in series.

During operation of thermal management system 10B, hot fluid flows from vapor cycle system 14 to fluid bypass valve 22. Fluid bypass valve 22 apportions hot fluid to fuel heat exchanger 28 based on instructions from controller 26 (not shown in FIG. 2). Hot fluid that is not delivered to fuel heat exchanger 28 flows from fluid bypass valve 22 to fluid bypass valve 24. The hot fluid flowing from fluid bypass valve 22 towards fluid bypass valve 24 mixes with any cooled fluid exiting fuel heat exchanger 28. Fluid bypass valve 24 apportions fluid to engine bay air heat exchanger 40 based on instructions from controller 26. Fluid that is not delivered to engine bay air heat exchanger 40 flows from fluid bypass valve 24 back to vapor cycle system 14. Fluid flowing directly from fluid bypass valve 22 mixes with any cooled fluid exiting engine bay air heat exchanger 40. While FIG. 2 illustrates an arrangement in which the hot fluid from vapor cycle system 14 first flows to fuel heat exchanger 28, thermal management system 10B can also be arranged so that the hot fluid first flows to engine bay air heat exchanger 40. As in thermal management system 10, controller 26 regulates the flow of hot fluid from vapor cycle system 14 to transfer heat to fuel and engine bay air depending on their heat sink capacities.

Based on the capacities of the fuel and engine bay air, controller 26 regulates the flow of hot fluid from vapor cycle system 14 to fuel heat exchange system 16 and engine bay air heat exchange system 18. The hot fluid transfers heat from vapor cycle system 14 to fuel and engine bay air. As noted above, systems in avionics bay 12 must maintain a temperature below about 15 °C (59 °F). In order to maintain that temperature, fluid flowing from vapor cycle system 14 to avionics bay 12 must be lower than 15 °C (59 °F) and generally about 10 °C (50 °F). To accomplish this, vapor cycle system 14 cools the fluid using both a vapor-compression refrigeration cycle and heat transfer to the fuel and engine bay air. Vapor cycle system 14 can transfer heat to the fuel, but the fuel must be maintained below its tolerable limit. The fuel can accept heat transfer until its temperature at the engine inlet reaches about 120 °C (250 °F). Once the fuel has reached its tolerable limit, it can no longer accept additional heat. Vapor cycle system 14 can also transfer heat to the engine bay air. Since the engine bay air is also used for cooling the engine, the engine bay air has surplus capacity only at certain times. The engine bay air can range from about 13 °C (55 °F) to about 93 °C (200 °F) depending on air speed and the engine bum rate. Based on the necessary temperature limits for the various heat sinks, controller 26 regulates heat transfer to maintain an acceptable avionics temperature.

FIG. 3 illustrates thermal management system 10C. Thermal management system 10C is similar to thermal management system 10 illustrated in FIG. 1. However, thermal management system 10C includes fuel bypass valve 46 in place of fluid bypass valve 22. Fuel bypass valve 46 allows fuel flowing from fuel reservoir 36 to engine 38 to bypass fuel heat exchanger 28. Sensor system 34 provides fuel temperature and flow rate information to controller 26. Controller 26 regulates fuel bypass valve 46 to allow fuel to flow to fuel heat exchanger 28 when it is capable of accepting heat transfer and blocking flow to fuel heat exchanger 28 when the fuel cannot accept heat from the hot fluid from vapor cycle system 14. In this embodiment, the bypass is located in fuel heat exchange system 16 (on the fuel side) instead of in vapor cycle system 14 (on the fluid side). Otherwise the system operates similar to thermal management system 10 illustrated in FIG. 1.

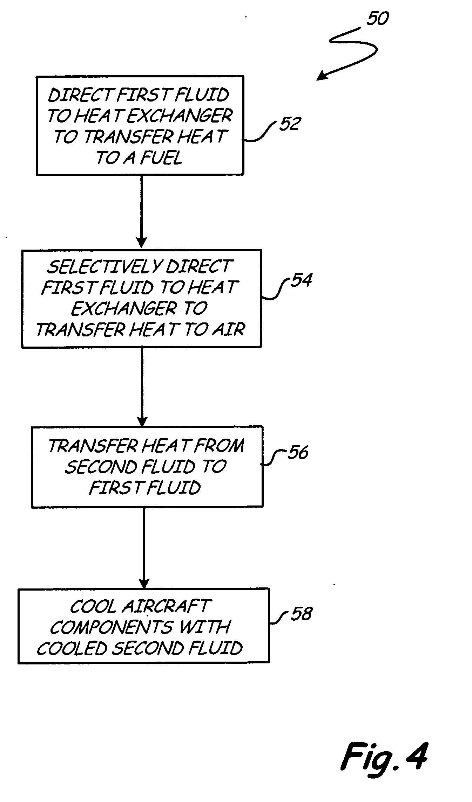

Thermal management system 10 provides a method for cooling aircraft components. One embodiment of such a method is illustrated in FIG. 4, which illustrates operation of thermal management system 10C shown in FIG. 3. Method 50 includes directing a first fluid having an elevated temperature to a first heat exchanger to transfer heat from the fluid to a fuel (step 52), selectively directing the first fluid to a second heat exchanger to transfer heat from the fluid to air (step 54), transferring heat from a second fluid to the first fluid (step 56) and cooling aircraft components with the cooled second fluid (step 58). In one embodiment, the hot first fluid from vapor cycle system 14 is selectively directed (regulated) between fuel heat exchanger 28 and bypass line 23 in step 52. In another embodiment, the hot first fluid from vapor cycle system 14 is directed to fuel heat exchanger 28 and a fuel is selectively directed to fuel heat exchanger 28. In step 54, the hot first fluid from vapor cycle system 14 is selectively directed between engine bay air heat exchanger 40 and bypass line 25. Depending on how the first fluid is directed, fuel heat exchanger 28 and/or engine bay air heat exchanger 40 transfer heat from the vapor cycle fluid to fuel and/or air used for cooling an engine bay. Vapor cycle 19 transfers heat from a second fluid to the first fluid in step 56. The first fluid transfers heat to other sources in steps 52 and 54 so that it can cool additional portions of second fluid in vapor cycle 19. In step 58, the cooled second fluid is then used to cool aircraft components by accepting heat transfer from avionics bay 12.

The present invention provides for a thermal management system with an adaptive heat sink for use in cooling aircraft components and a method for cooling the aircraft components. Heat is transferred to one or both of two generally out of phase systems that serve as heat sinks. Since the capacities of the heat sinks are generally out of phase with one another, at least one heat sink or a combination of both heat sinks can be used to provide effective cooling for aircraft components at any given time. The adaptive heat sink allows for cooling under all of the various aircraft conditions experienced from ground idle to take off to landing.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An avionics cooling system (10, 10B, 10C) comprising:
a first heat exchange system (16);
a second heat exchange system (18) having a heat sink capacity that is generally out of phase with a heat sink capacity of the first heat exchange system; and
a vapor cycle system (14) having a fluid loop (20) in communication with the first and second heat exchange systems, wherein the fluid loop transfers heat to the first and second heat exchange systems.

2. The avionics cooling system of claim 1, wherein the first heat exchange system transfers heat from the fluid loop to a fuel, and wherein the second heat exchange system transfers heat from the fluid loop to air that provides cooling to an engine bay.

3. The avionics cooling system of claim 2, wherein a component of the second heat exchange system (18) is located in an air scoop duct of the engine bay.

4. The avionics cooling system of claim 2, wherein the second heat exchange system (18) further comprises:
a fan (44) for directing air through the engine bay.

5. The avionics cooling system of claim 1, 2, 3, or 4, wherein the first (16) and second (18) heat exchange systems are in parallel.

6. The avionics cooling system of claim 1, 2, 3 or 4, wherein the first (16) and second (18) heat exchange systems are in series.

7. The avionics cooling system of any preceding claim, wherein the vapor cycle system (14) is configured to provide cooling to an avionics bay (12).

8. The avionics cooling system of claim 7, wherein the vapor cycle system (14) is further configured to provide cooling to air supplied to an aircraft.

9. The avionics cooling system of claim 2 and optionally 3, 4, 5, 6, 7 or 8, wherein the vapor cycle system (14) comprises:
a first bypass valve (22) allowing fluid in the fluid loop to bypass the first heat exchange system;
a second bypass valve (24) allowing fluid in the fluid loop to bypass the second heat exchange system; and
a controller (26) for regulating the first and second bypass valves.

10. The avionics cooling system of claim 9, wherein the first (22) and second (24) bypass valves are configured to vary flow of fluid to the first and second heat exchange systems.

11. The avionics cooling system of claim 9 or 10, wherein the controller (26) regulates flow through the first bypass valve based on fuel temperature and fuel flow rate, and wherein the controller regulates flow through the second bypass valve based on air temperature, air flow rate, engine temperature and engine throttle setting.

12. The aircraft cooling system of any of claims 1 to 8, further comprising: a fuel bypass valve (46) allowing fuel to bypass the fuel heat exchanger (28); preferably wherein flow of fuel through the fuel bypass valve is regulated based on fuel temperature and fuel flow rate.

13. A method for cooling aircraft components (12), the method comprising:
directing a first fluid having an elevated temperature to a first heat exchanger (28) to transfer heat from the first fluid to a fuel, wherein heat is transferred from the first fluid to the fuel based on a heat sink capacity of the fuel;
selectively directing the first fluid to a second heat exchanger (40) to transfer heat from the first fluid to air, wherein the first fluid is selectively directed to the second heat exchanger based on a heat sink capacity of the air;
transferring heat from a second fluid to the first fluid to cool the second fluid; and
cooling aircraft components with the second fluid.

14. The method of claim 13, wherein the first fluid is selectively directed to the first heat exchanger (28) based on fuel temperature and fuel flow rate, and wherein the first fluid is selectively directed to the second heat exchanger (40) based on air temperature, air flow rate, engine temperature and engine throttle setting.

15. The method of claim 13, wherein the fuel is selectively directed to the first heat exchanger (28) based on fuel temperature and fuel flow rate, and wherein the first fluid is selectively directed to the second heat exchanger (40) based on air temperature, air flow rate, engine temperature and engine throttle setting.
